(19) Europäisches Patentamt / European Patent Office / Office européen des brevets

(11) **EP 3 990 960 B1**

(12) **EUROPEAN PATENT SPECIFICATION**

(45) Date of publication and mention
of the grant of the patent:
**09.10.2024  Bulletin 2024/41**

(21) Application number: **19756141.8**

(22) Date of filing: **13.08.2019**

(51) International Patent Classification (IPC):
**G02B 13/00** *(2006.01)*      **G02B 17/08** *(2006.01)*

(52) Cooperative Patent Classification (CPC):
**G02B 17/0804; G02B 13/0055; G02B 13/009;
G02B 17/0856; G02B 17/086**

(86) International application number:
**PCT/EP2019/071727**

(87) International publication number:
**WO 2021/028028 (18.02.2021 Gazette 2021/07)**

(54) **COMPACT CATADIOPTRIC OPTICAL SYSTEM FOR MOBILE PHONES**

KOMPAKTES KATADIOPTRISCHES OPTISCHES SYSTEM FÜR MOBILTELEFONE

SYSTÈME OPTIQUE CATADIOPTRIQUE COMPACT POUR TÉLÉPHONES MOBILES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.05.2022  Bulletin 2022/18**

(73) Proprietor: **Huawei Technologies Co., Ltd.
Longgang District
Shenzhen,
Guangdong 518129 (CN)**

(72) Inventors:
• **AIKIO, Mauri
02044 VTT (FI)**

• **OJALA, Kai
02044 VTT (FI)**

(74) Representative: **Maiwald GmbH
Elisenhof
Elisenstraße 3
80335 München (DE)**

(56) References cited:
**JP-A- H06 273 673        US-A1- 2015 177 496
US-A1- 2016 187 631       US-A1- 2018 252 905
US-B1- 9 933 604**

**Description**

TECHNICAL FIELD

The disclosure relates generally to light ray path folding optical systems, and in particular to a modified Schmidt-Cassegrain optical system for use in an imaging system of an electronic device, more particularly in a compact telephoto camera objective for mobile phones.

BACKGROUND

The number of people around the world who use a mobile phone increased by 100 million only in 2018, with the global total reaching more than 5.1 billion users by January 2019. From these mobile phones, at least 4.4 billion include some type of camera objective, and 1.2 billion are compact-sized smartphones. Among these smartphones, the current flagship models use multiple sub-camera modules to generate optical zoom, authentic depth of focus or focus blur for the primary camera system.

The size requirements of primary cameras for flat form-factor handheld smart devices are becoming more and more restricted with the continuous decrease of device dimensions, especially their z-height (as the industry generally refers to the thickness of a phone), while in the same time there is increasing demand for better quality images and higher zoom factors. The z-height itself can be reduced while increasing image quality, for example by integrating additional telephoto sub-camera module(s) in the device, but the maximum multiple camera zoom factor at the moment is still around 3x and the achievable equivalent focal length (based on a single-lens reflex camera) with existing mobile camera objectives is still around 80 mm.

On the other hand, standard refractive telephoto camera objectives tend to be long and larger zoom factors may need folded optics. The device dimensions limit the camera lens height, so that a 10x zoom factor becomes difficult to reach with common refractive lens constructions. If the folding happens in one plane only, it may restrict the aperture diameter too.

Another problem in mobile phone cameras is the aperture size, which deepens the depth of field (DOF) in telephoto images. Small aperture in a long focal length optical system also causes diffraction blur or "smoothness" in telephoto images. In current mobile-size telephoto lenses, the diffraction may limit the resolution of the lens and the crispiness of local contrast in images with small pixel size sensors.

Limited aperture area in the folded refractive telephoto lenses also generates more noise in the image. Noise is reduced by using pixel binning or multiple simultaneous or sequential exposures for one image. Another solution for reducing the noise level is having one of sub-camera sensors or pixels as grayscale in the main camera system (e.g. by one of the cameras not having colour filters). When a grayscale image is combined with an image from a colour camera, there would be larger dynamics and less noise in the final image.

Thus, the F-number or aperture area is essential in every individual camera unit in the system to brighten the image and reduce the noise level. A camera unit with a better F-number (bigger aperture area) collects more light into the image making the signal-to-noise ratio higher.

There have been made attempts at solving some of these problems by folding the light ray path, such as by using Cassegrain double reflection-based systems as telephoto camera objective. Such a Cassegrain system comprises a parabolic primary mirror and a hyperbolic secondary mirror that reflects the light back down through a hole in the primary. By folding the light ray path, the design is made more compact. However, these systems comprising multiple mirrors and lenses are mechanically complex, with low production and assembly tolerance, and are thus expensive and difficult to implement is small-size devices. Furthermore, due to the sensitive mechanical parts they are prone to fail after extended use.

US 2016/187631 A1 describes an iris recognition lens system

US 2018/252905 A1 describes a portrait lens system formed with an adjustable meniscus lens.

US 9 933 604 B1 describes a compact catadioptric lenses lens systems with improved image quality.

SUMMARY

It is an object to provide an improved optical system for use as a compact telephoto camera objective that is suitable for mobile phones, and which overcomes or at least reduces the problems mentioned above.

The foregoing and other objects are achieved by the features of the independent claims Further implementation forms are apparent from the dependent claims, the description and the figures.

According to a first aspect, there is provided a catadioptric optical system comprising:

a solid body of optical material, the solid body comprising

an annular entry surface;

an annular first intermediary surface located opposite to the entry surface;

a second intermediary surface being substantially continuous with the inner ring of the annular entry surface; and

an exit surface located opposite to the second intermediary surface; wherein the system further comprises

a primary reflective surface and

a secondary reflective surface; wherein

the primary reflective surface and the secondary reflective surface being arranged so that a light ray entering the system through the entry surface is folded at least two times before exiting through the exit surface; and wherein

the exit surface is connected to the first intermediary surface by an inner wall extending towards the second intermediary surface, thereby defining a void inside the solid body.

Both the second intermediary surface and the exit surface are annular surfaces, which allows for additional degree of freedom and adjustment options for the system.

Such a catadioptric optical system with a double folding structure, i.e. a structure in which the light ray path is folded two times by means of reflection (back-forth-back light path), allows a focal length which is longer than the actual outer dimensions of the optical system, therefore enabling use in a telephoto objective lens of a mobile smartphone camera to reach longer focal length, higher zoom ratio and high performance, while keeping a compact z-height. In addition, the annular (ring) shape of the entry surface first intermediary surface enables increased aperture area in the double folding design, which enables large light gathering area and narrower depth of focus and field of view for the telephoto objective. The solid body (one-block or monobloc) design further provides simple mechanical assembly, higher manufacture tolerance, fabrication and usability robustness. The inner walls and the thereby created void in the solid body is particularly advantageous for arranging an additional lens within the optical system, therefore allowing for increased image quality without increasing the required total z-height of the system.

In a possible implementation form of the first aspect the entry surface is an annular refractive surface of revolution arranged coaxially with the optical axis of the system, enabling the system to balance optical aberrations for an increased image quality.

In an embodiment, the entry surface is has an aspheric shape, allowing for more optimized correction of the spherical aberration of the primary reflective surface.

In a possible further implementation form of the first aspect the first intermediary surface is an annular, concave surface of revolution arranged coaxially with the optical axis of the system, which allows for a further optimized design of the system.

In a possible further implementation form of the first aspect the second intermediary surface is a convex surface of revolution arranged coaxially with the optical axis of the system, which allows for a further optimized design of the system.

In a possible further implementation form of the first aspect the primary reflective surface is an annular, concave surface of revolution, with a curvature substantially corresponding to the curvature of the first intermediary surface, arranged coaxially with the optical axis of the system, allowing for a simple and compact structure which may be designed in accordance with specific reflection requirements.

In a possible further implementation form of the first aspect the secondary reflective surface is a circular, convex surface of revolution, with a curvature substantially corresponding to the curvature of the second intermediary surface, arranged coaxially with the optical axis of the system, allowing for a simple and compact structure which may be designed in accordance with specific reflection requirements.

In a possible further implementation form of the first aspect the primary reflective surface is a mirror film coating at least partially covering the first intermediary surface, allowing for a simple and compact structure which may be designed in accordance with specific reflection requirements.

In a further possible implementation form of the first aspect the primary reflective surface is a mirror that is one and the same as the first intermediary surface, allowing for a simple and compact structure which may be designed in accordance with specific reflection requirements.

In a further possible implementation form of the first aspect the secondary reflective surface is a mirror film coating at least partially covering the second intermediary surface, allowing for a simple and compact structure which may be designed in accordance with specific reflection requirements.

In a further possible implementation form of the first aspect the secondary reflective surface is a mirror that is one and the same as the second intermediary surface, allowing for a simple and compact structure which may be designed in accordance with specific reflection requirements.

In a further possible implementation form of the first aspect at least one of the first intermediary surface or the second intermediary surface is a refractive surface, enabling for balancing optical aberrations for an increased image quality.

In a further possible implementation form of the first aspect the system further comprises a circular Mangin mirror arranged after the second intermediary surface in the light ray path, the Mangin mirror comprising the secondary reflective surface and a third intermediary surface, the third intermediary surface being a convex, refractive surface of revolution, and the secondary reflective surface being a reflective coating on the rear side of the third intermediary surface with respect to the light ray path. This embodiment enables an enhanced image quality and eases the tolerance sensitivity by adding optimizable surface forms in the system. Furthermore, the added intermediary surface can be utilized as an additional degree of freedom in the performance optimization

In an embodiment the system further comprises another, annular Mangin mirror arranged after the first intermediary surface in the light ray path, the Mangin mirror comprising the primary reflective surface and a fourth intermediary surface, the fourth intermediary surface being a concave, refractive surface of revolution, and the primary reflective surface being a reflective coating on the rear side of the fourth intermediary surface with respect to the light ray path. This embodiment further enhances the image quality and reduces tolerance sensitivity.

In a further possible implementation form of the first aspect the exit surface is a circular, refractive surface of revolution arranged coaxially with the optical axis of the system, enabling for further balancing optical aberrations for an increased image quality.

In a further possible implementation form of the first aspect the primary reflective surface is a spherical surface, which allows for a simplified design while keeping the advantages of the resulting system.

In a further possible implementation form of the first aspect the secondary reflective surface is a hyperbolic surface, prolonging the focal length and reducing the over-corrected spherical aberration to corrected-level at the image plane, thereby allowing for further increased image quality.

In a further possible implementation form of the first aspect all the refractive surfaces of the system are aspheric surfaces of revolution to achieve best possible performance of the system.

In a further possible implementation form of the first aspect the system further comprises an additional optical lens arranged within the void, coaxially with the optical axis of the system, configured to correct spherical aberration of the system, thereby increasing the image quality while still enabling compact outer dimensions In one embodiment the additional optical lens is a Schmidt corrector plate, which allows for specifically advantageous correction of spherical aberrations in a catadioptric optical system.

According to a second aspect, there is provided an electronic device comprising:

a housing;

a catadioptric optical system according to any possible implementation form of the first aspect, arranged within the housing;

wherein the housing further comprises an aperture arranged within a wall of the housing so as to allow light rays from an object enter the catadioptric optical system; and wherein

the device further comprises an image sensor arranged to be able to receive light rays exiting the catadioptric optical system.

Such an electronic device, containing the above described optical system (e.g. in the form of a telephoto objective embedded into structure of a mobile smartphone) allows for a thin form factor while still having a long focal length. The arrangement of the optical system within the housing can enable additional degrees of freedom, e.g. for adjusting the focus length

The arrangement of the device enables the solid body of the optical system to capture, crop, restrict and convert a part of the angular incoming 3D light field (that is hitting the aperture from the scenery) to the spatial image projection on to the 2D image sensor 17 plane, thus converting ray angles to the spatial position on the image sensor 17.

In a possible implementation form of the second aspect a thickness of the solid body, defined as the maximum length of the solid body measured along the optical axis of the catadioptric optical system, is between 75% to 125% of a diagonal dimension of the image sensor, which provides a particularly advantageous design for optimized image quality.

In another, more preferred embodiment a thickness of the solid body is between 80% to 120% of the diagonal dimension of the image sensor, which provides an even more advantageous design for optimized image quality.

In a further possible implementation form of the second aspect the distance between the exit surface and the image sensor, measured along the optical axis of the catadioptric optical system, is between 80% to 120% of a diagonal dimension of the image sensor, which provides a particularly advantageous design for optimized image quality.

In another, more preferred embodiment the distance between the exit surface and the image sensor is between 87.5% to 112.5% of a diagonal dimension of the image sensor, which provides an even more advantageous design for optimized image quality.

In a further possible implementation form of the second aspect the catadioptric optical system further comprises an optical lens arranged within the void, and the distance between the exit surface and the image sensor, measured along the optical axis of the catadioptric optical system, is approximately 82% of a diagonal dimension of the image sensor, which provides a particularly advantageous design for optimized image quality.

These and other aspects will be apparent from and the embodiment(s) described below.

BRIEF DESCRIPTION OF THE DRAWINGS

In the following detailed portion of the present disclosure, the aspects, embodiments and implementations will be explained in more detail with reference to the example embodiments shown in the drawings, in which:

Fig. 1 shows a schematic cross-section of a catadioptric optical system in accordance with one embodiment of the first aspect not forming part of the claimed invention;

Fig. 2 shows a schematic rotational cross-section of a catadioptric optical system in accordance with another embodiment of the first aspect;

Fig. 3 shows a schematic rotational cross-section of a catadioptric optical system in accordance with another embodiment of the first aspect;

Fig. 4 shows a schematic rotational cross-section of a catadioptric optical system in accordance with another embodiment of the first aspect;

Fig. 5 shows a schematic cross-section of a catadioptric optical system in accordance with an embodiment of the claimed invention;

Fig. 6 shows a schematic cross-section of a device in accordance with one embodiment of the second aspect not forming part of the claimed invention; and

Fig. 7 shows a schematic cross-section of a device in accordance with another embodiment of the second aspect.

DETAILED DESCRIPTION

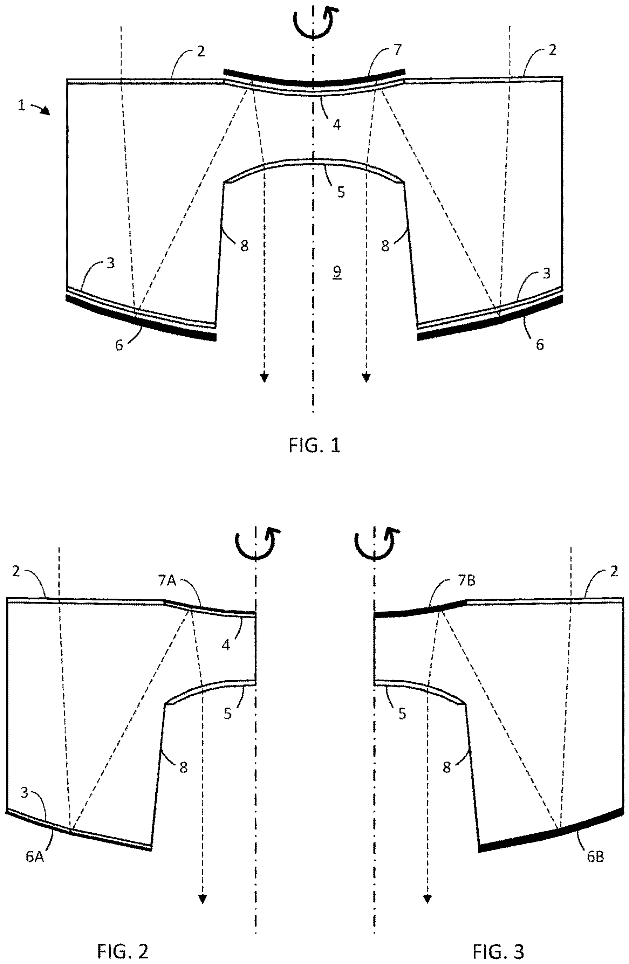

Fig. 1 shows a catadioptric optical system according to the present disclosure, wherein a catadioptric optical system is defined as a system where refraction and reflection are combined in an optical system, usually via lenses (dioptrics) and curved mirrors (catoptrics).

The optical system comprises a solid body 1 of optical material with an annular entry surface 2, and an annular first intermediary surface 3 located opposite to the entry surface 2. In the illustrated embodiment, the entry surface 2 is an annular refractive surface of revolution arranged coaxially with the optical axis of the system, and the first intermediary surface 3 is an annular, concave surface of revolution arranged coaxially with the optical axis of the system.

The solid body 1 further comprises a second intermediary surface 4 that is substantially continuous with the inner ring of the annular entry surface 2, and an exit surface 5 located opposite to the second intermediary surface 4. In the illustrated embodiment, the second intermediary surface 4 is a circular, convex surface of revolution arranged coaxially with the optical axis of the system, and the exit surface 5 is a circular, refractive surface of revolution arranged coaxially with the optical axis of the system.

In some embodiments of the optical system at least one of the first intermediary surface 3 or the second intermediary surface 4 is a refractive surface. In the illustrated embodiment, both the first intermediary surface 3 and the second intermediary surface 4 are refractive surfaces.

In an embodiment, all the refractive surfaces of the solid body 1 are aspheric surfaces of revolution.

In another embodiment, all the refractive surfaces of the optical system are aspheric surfaces of revolution.

The system also comprises a primary reflective surface 6 and a secondary reflective surface 7. The primary reflective surface 6 and the secondary reflective surface 7 are arranged so that a light ray entering the system through the entry surface 2 is folded at least two times before exiting through the exit surface 5. In the illustrated embodiment, the primary reflective surface 6 is an annular, concave surface of revolution, with a curvature substantially corresponding to the curvature of the first intermediary surface 3, arranged coaxially with the optical axis of the system, while the secondary reflective surface 7 is a circular, convex surface of revolution, with a curvature substantially corresponding to the curvature of the second intermediary surface 4, arranged coaxially with the optical axis of the system.

In an embodiment, the primary reflective surface 6 is a spherical surface.

In an embodiment, the secondary reflective surface 7 is a hyperbolic surface.

In some embodiments, such as the one illustrated in Fig. 1, the primary reflective surface 6 and the secondary reflective surface 7 are separated from the solid body 1 and arranged as floating elements. This results in an airspace thickness between the solid body 1 and each reflective surface, which can be used as variables for performance optimization, or for adjusting the system focus. In further possible embodiments, floating element orientation i.e. decentre or tilt with respect to the solid body 1 may be utilized for camera optical image stabilization.

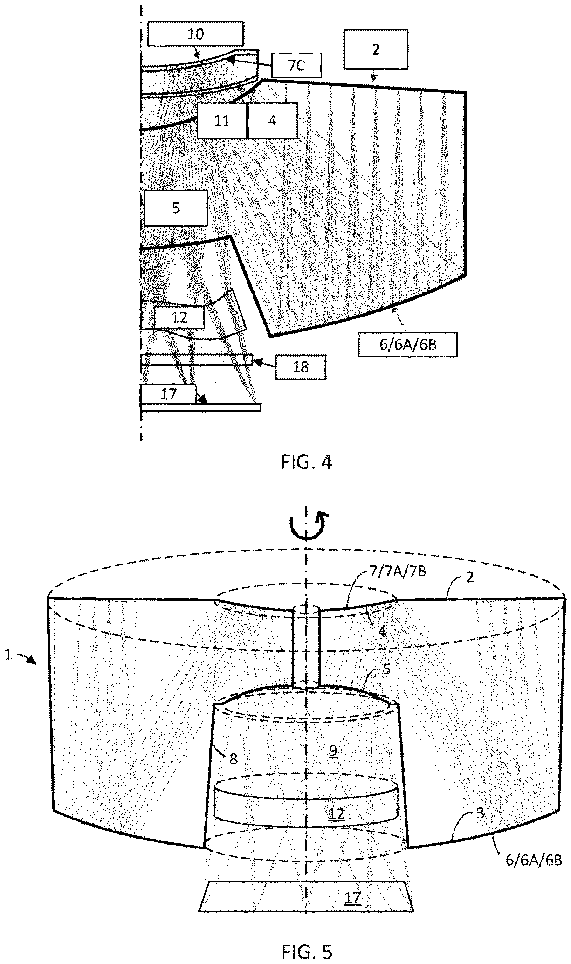

As illustrated in in Fig. 1, the exit surface 5 is connected to the first intermediary surface 3 by an inner wall 8 extending towards the second intermediary surface 4, thereby defining a void 9 inside the solid body 1. This void 9 is particularly advantageous for arranging an additional lens within the optical system without increasing the required total z-height, such as a lens 12 as illustrated on Figs. 4 to 7.

As can be seen in Fig. 1. (illustrated with dashed lines), light enters to the system through the entry surface 2, which may be an annular aspheric lens surface, and propagates (through the annular first intermediary surface 3) to the first folding reflection at the primary reflective surface 6, which is the positive primary mirror in the system. The next step (after traversing the second intermediary surface 4) is a second folding reflection at the secondary reflective surface 7, which is the negative secondary mirror. The material block of the solid body 1 ends at exit surface 5 that opens to an airspace (until the image plane).

This double folding-shape ray path between folding mirrors form a two-mirror Cassegrain telescope type optical system, which is in some way similar to a standard telephoto lens with positive and negative lens groups, replaced by mirrors. The distances between the components (surfaces) relate to focal length of the primary reflective surface and the different embodiments of the structure enable balancing other aberrations like coma, astigmatism, field curvature etc.

Figs. 2 and 3 show further embodiments of the catadioptric optical system according to the present disclosure, wherein the primary reflective surface 6 and secondary reflective surface 7 are implemented as part of the solid body 1, instead of separate parts of the optical system.

In the embodiment illustrated on Fig. 2, the primary reflective surface 6 is a mirror film coating 6A at least partially covering the first intermediary surface 3, and the secondary reflective surface 7 is also a mirror film coating 7A, at least partially covering the second intermediary surface 4.

In the embodiment illustrated on Fig. 3, the primary reflective surface 6 is a mirror 6B that is one and the same as the first intermediary surface 3, and the secondary reflective surface 7 is also a mirror 7B, that is one and the same as the second intermediary surface 4.

Fig. 4 shows a further embodiment of the catadioptric optical system according to the present disclosure, wherein the primary reflective surface 6 is implemented as part of the solid body 1. In one embodiment the primary reflective surface 6 is a mirror film coating 6A covering the first intermediary surface 3. In another embodiment the primary reflective surface 6 is a mirror 6B that is one and the same as the first intermediary surface 3.

However, the secondary reflective surface 7 is implemented separately, as part of a circular Mangin mirror 10 arranged after the second intermediary surface 4 in the light ray path. In optics, a Mangin mirror is a negative meniscus lens with the reflective surface on the rear side of the glass forming a curved mirror that reflects light without spherical aberration. More specifically, the spherical aberration normally produced by the simple spherical mirror surface is canceled out by the opposite spherical aberration produced by the light traveling through the negative lens. Since light passes through the glass twice, the overall system acts like a triplet lens.

The Mangin mirror 10 further comprises a third intermediary surface 11, which in the illustrated embodiment is a convex, refractive surface of revolution. The secondary reflective surface 7 in this embodiment is implemented as a reflective (mirror) coating 7C on the rear side of the third intermediary surface 11 with respect to the light ray path.

In a further possible embodiment, the primary reflective surface 6 is also implemented as part of a Mangin mirror, similarly to the embodiment described above, which enables a more superior image quality, and eases the tolerance sensitivity of the solution by added optimizable surface forms in the system.

In further possible embodiments, the optical system comprises an additional optical lens 12 arranged within the void 9, as illustrated in Figs. 4 to 7. The optical lens 12 is arranged coaxially with the optical axis of the system, configured to correct spherical aberration of the system.

In an embodiment illustrated in Fig. 4, the additional optical lens 12 is a Schmidt corrector plate. This arrangement is closest in design to the Schmidt-Cassegrain (SC) type telescope optics.

Fig. 5 shows an embodiment of the catadioptric optical system according to the claimed invention, wherein both the second intermediary surface 4 and the exit surface 5 are annular surfaces, with a hole arranged in the solid body along the optical axis of the system. Thus, in this embodiment, all the surfaces of the solid body 1 that fold the light path or are traversed by the light path are annular surfaces. As the figure illustrates, most of the described embodiments are rotationally symmetric, with the rotational axis being the optical axis of the system.

In Figs. 4 and 5 an additional image sensor 17 is also shown, arranged to be able to receive light rays exiting the catadioptric optical system 13. In an embodiment illustrated in Fig. 4, there is arranged a sheet of protective glass 18 before the image sensor 17 in the light ray path.

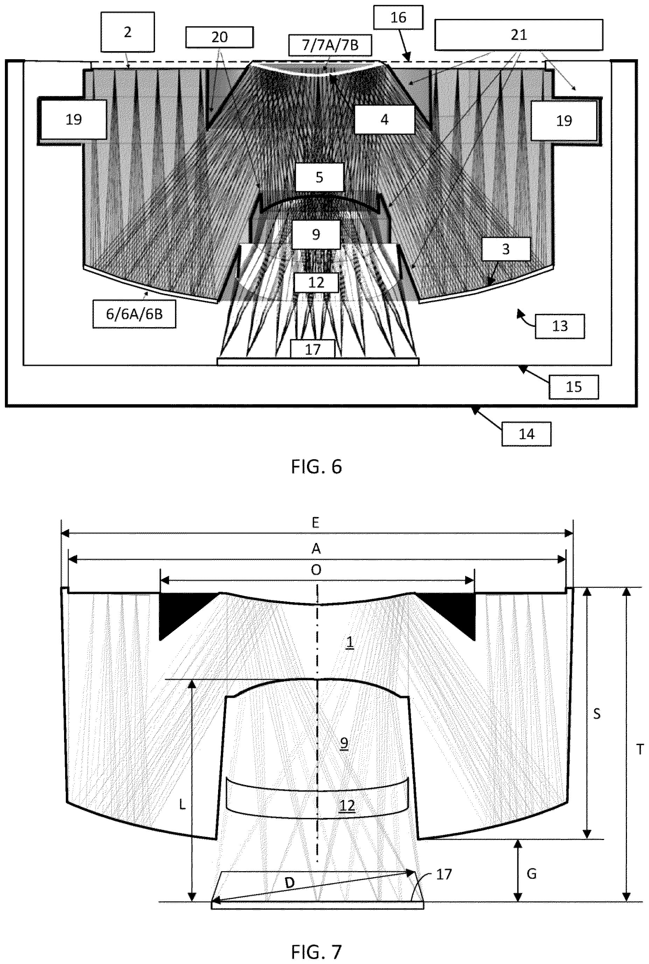

Fig. 6 shows an exemplary implementation of an electronic device 14 according to the present disclosure comprising a housing 15 and, arranged within the housing 15, a catadioptric optical system 13 according to any embodiment described above. The housing 15 further comprises an aperture 16 arranged within its wall so as to allow light rays from an object enter the catadioptric optical system 13, and the device 14 further comprises an image sensor 17 arranged to be able to receive light rays exiting the catadioptric optical system 13.

In some embodiments a sheet of protective glass 18 may be arranged before the image sensor 17 in the light ray path, as illustrated in Fig. 4.

In some embodiments the optical system may comprise an additional optical lens 12 arranged within the void 9. In a particularly advantageous embodiment this additional lens 12 is made of Zeon E48R, which is an innovative plastic (Cyclo Olefin Polymer) material primarily used for manufacturing optical parts with attributes such as low moisture absorption, good transparency and high precision molding.

In an embodiment the solid body comprises a surrounding annular mechanical step 19, and the housing 15 may comprise in its walls a circular or threaded inset corresponding to the annular step 19 to be able to hold the solid body 1 in place, and optionally allow it to move closer or further from the image sensor 17 parallel to the optical axis of the system 13. In an embodiment, the solid body can be moved with respect to the image sensor 17 in predefined steps. In another embodiment, the solid body can be moved with respect to the image sensor 17 continuously.

In a particularly advantageous embodiment, the optical material used for the solid body 1 optical Polymethyl methacrylate (PMMA, also known as acrylic, acrylic glass, or plexiglass), and the body 1 is implemented by diamond turning.

In a further embodiment the solid body further comprises baffle drilling 20 and an optional diffuse surface coating 21 (matte black paint) to reduce incident light and unwanted reflections in the system 13.

Fig. 7 shows an embodiment of the catadioptric optical system 13 within an electronic device 14 according to the present disclosure, illustrating relative dimensions of a preferred arrangement of the optical system in the device 14 with respect to the dimensions of the image sensor 17 and the distance therefrom.

In the illustrated embodiment, the diagonal dimension D of the image sensor 17 is illustrated as length of a diagonal line between two opposing corners of the image sensor 17 (since image sensors are generally square shaped, any of the diagonals can be taken as diagonal dimension). The thickness S of the solid body 1 is illustrated as the maximum length of the solid body 1 measured along the optical axis of the catadioptric optical system 13. The airspace length L is illustrated as the measured largest distance between the exit surface 5 and the image sensor 17 along the optical axis of the catadioptric optical system 13. The gap length G is illustrated as the measured shortest distance between the solid body 1 and the image sensor 17. The total track length T is illustrated as the distance between the furthest point the solid body 1 and the image sensor 17. Thus, as can be seen from the figure, the sum of the gap length G and the thickness S of the solid body 1 equals the total track length T=S+G.

Further illustrated in Fig. 7 are the aperture obstruction diameter O, the full aperture diameter A, and the full element diameter E.

In a preferred embodiment, the thickness S of the solid body 1 is between 75% to 125% of a diagonal dimension D of the image sensor 17. In a more preferred embodiment, the thickness S of the solid body 1 is between 80% to 120% of a diagonal dimension D of the image sensor 17.

In another preferred embodiment, the airspace length L is between 80% to 120% of a diagonal dimension D of the image sensor 17. In a more preferred embodiment, the airspace length L is between 87.5% to 112.5% of a diagonal dimension D of the image sensor 17.

In a further preferred embodiment, wherein the catadioptric optical system 13 comprises an optical lens 12 arranged within the void 9, the airspace length L is approximately 82% of a diagonal dimension D of the image sensor 17.

EXEMPLARY EMBODIMENT

A specific exemplary embodiment according to the arrangements shown in Fig. 7 has been implemented as a prototype. This prototype was optimized for 2 focus distances: infinity and 1.5 m. The gap length G in this is exemplary embodiment can be adjusted by 0.485 mm steps between extreme focus distances. The image sensor diagonal D target is 4.2 mm. The z-height of the resulting system 13 is under 7 mm. The primary reflective surface 6 has the biggest diameter in the system and defines the element diameter as 10 mm.

All the optical surfaces in the prototype solid body 1 (lens) are optimized into odd-aspheric form by using maximum of 8th order terms. The optimization error function has restrictions for sensor size, z-height, and element as well as airspace thicknesses and sizes. Targets were at image quality, ray angles to surfaces, transmission and distortion of the system. The resulting dimensions are summarized in the table below.

(Table 1)

| Lens configuration | 1 | 2 |
|---|---|---|
| Object Distance | ~INF | 1500.00 mm |
| Max Field | 8.80 ° | 8.32 ° |
| Horizontal Field | 7.04 | 6.66 ° |
| Focal length | 28.10 mm | 28.10 mm |
| F-number | 2.68 | 2.98 |
| Image circle diameter on sensor | 4.21 mm | 4.29 mm |
| Total track (T) | 6.360 | 6.845 mm |
| Full aperture diameter (A) | 9.60 mm | 9.60 mm |
| Aperture obstrucion diameter (O) | 4.80 mm | 4.80 mm |
| Total element diameter (E) | 10 mm | 10 mm |
| Gap length (G) | 0.715 mm | 1.2 mm |
| Solid body thickness (S) | 5.645 mm | 5.645 mm |
| Image sensor diagonal (D) | 4.20 mm | 4.20 mm |
| Fnro from aperture areas | 3.81 | 3.81 |
| Relative illumination % | >70 % | |

## FORMULAS FOR THE ASPHERIC SURFACES

The optical surface basic asphericity can be described by standard, even or odd aspheric formulas. In the performance optimization all surfaces may use at least 2nd order aspheric parameters. Preferably more than 6th order aspheric parameters are needed to get the best performance with the higher order aberration correction. Similar surface forms can be obtained by aspherical surface types such as spline, nurbs, etc. However, adding too complex aspheric forms to lens surfaces may deteriorate the image quality by adding high spatial frequencies to surface forms and the lens distortion curves. The preferred formulas for the aspheric surfaces are given below.

The "sag" or z-coordinate of the *standard* surface is given by:

$$z = \frac{cr^2}{1 + \sqrt{1 - (1+k)c^2 r^2}}$$

(1)

Wherein:

- *c* is the curvature (the reciprocal of the radius)
- *r* is the radial coordinate in lens units
- *k* is the conic constant

The *even asphere* surface model uses only the even powers of the radial coordinate with parameters $\alpha$ to describe the asphericity. The surface sag is given by:

$$z = \frac{cr^2}{1 + \sqrt{1 - (1+k)c^2 r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

(2)

In the *odd asphere* surface model both even and odd powers with parameters $\beta$ of *r* are used. The sag is given by:

$$z = \frac{cr^2}{1 + \sqrt{1 - (1+k)c^2 r^2}} + \beta_1 r^1 + \beta_2 r^2 + \beta_3 r^3 + \beta_4 r^4 + \beta_5 r^5 + \beta_6 r^6 + \beta_7 r^7 + \beta_8 r^8$$

$$(3)$$

The various aspects and implementations has been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope.

## Claims

1. A catadioptric optical system (13) comprising:

   a solid body (1) of optical material, said solid body (1) comprising
   an annular entry surface (2);
   an annular first intermediary surface (3) located opposite to said entry surface (2);
   a second intermediary surface (4) being substantially continuous with the inner ring of said annular entry surface (2); and
   an exit surface (5) located opposite to said second intermediary surface (4); wherein the system comprises

   a primary reflective surface (6) and
   a secondary reflective surface (7); wherein
   said primary reflective surface (6) and said secondary reflective surface (7) being arranged so that a light ray entering the system through said entry surface (2) is folded at least two times before exiting through said exit surface (5); and wherein said exit surface (5) is connected to said first intermediary surface (3) by an inner wall (8) extending towards said second intermediary surface (4), thereby defining a void (9) inside said solid body (1);
   **characterized in that** both said second intermediary surface (4) and said exit surface (5) are annular surfaces

2. The system according to claim 1, wherein said entry surface (2) is an annular refractive surface of revolution arranged coaxially with the optical axis of the system

3. The system according to any one of claims 1 or 2, wherein said first intermediary surface (3) is an annular, concave surface of revolution arranged coaxially with the optical axis of the system.

4. The system according to any one of claims 1 to 3, wherein said second intermediary surface (4) is a convex surface of revolution arranged coaxially with the optical axis of the system.

5. The system according to any one of claims 1 to 4, wherein said primary reflective surface (6) is an annular, concave surface of revolution, with a curvature substantially corresponding to the curvature of said first intermediary surface (3), arranged coaxially with the optical axis of the system

6. The system according to any one of claims 1 to 5, wherein said secondary reflective surface (7) is a circular, convex surface of revolution, with a curvature substantially corresponding to the curvature of said second intermediary surface (4), arranged coaxially with the optical axis of the system

7. The system according to any one of claims 1 to 6, wherein said primary reflective surface (6) is a mirror film coating (6A) at least partially covering said first intermediary surface (3), or wherein said primary reflective surface (6) is a mirror (6B) that is one and the same as said first intermediary surface (3).

8. The system according to any one of claims 1 to 7, wherein said secondary reflective surface (7) is a mirror film coating (7A) at least partially covering said second intermediary surface (4), or wherein said secondary reflective surface (7) is a mirror (7B) that is one and the same as said second intermediary surface (4).

9. The system according to any one of claims 1 to 6, wherein at least one of said first intermediary surface (3) or said second intermediary surface (4) is a refractive surface

10. The system according to any one of claims 1 to 6, further comprising a circular Mangin mirror (10) arranged after the second intermediary surface (4) in said light ray path, said Mangin mirror (10) comprising said secondary reflective surface (7) and a third intermediary surface (11), said third intermediary surface (11) being a convex, refractive surface of revolution, and said secondary reflective surface (7) being a reflective coating (7C) on the rear side of said third intermediary surface (11) with respect to said light ray path.

11. The system according to any one of claims 1 to 10, further comprising an additional optical lens (12) arranged within said void (9), coaxially with the optical axis of the system, for correcting spherical aberration of the system.

12. An electronic device (14) comprising:

   a housing (15);
   a catadioptric optical system (13) according to any one of claims 1 to 11 arranged within said housing (15);
   wherein said housing (15) further comprises an aperture (16) arranged within a wall of said housing (15) so as to allow light rays from an object enter the catadioptric optical system (13); and wherein
   said device (14) further comprises an image sensor (17) arranged to be able to receive light rays exiting said catadioptric optical system (13).

13. An electronic device (14) according to claim 12, wherein a thickness (S) of said solid body (1), defined as the maximum length of the solid body (1) measured along the optical axis of the catadioptric optical system (13), is between 75% to 125% of a diagonal dimension (D) of said image sensor (17), more preferably between 80% to 120% of the diagonal dimension (D) of said image sensor (17).

14. An electronic device (14) according to any one of claims 12 or 13, wherein the distance (L) between said exit surface (5) and said image sensor (17), measured along the optical axis of the catadioptric optical system (13), is between 80% to 120% of a diagonal dimension (D) of said image sensor (17), more preferably between 87.5% to 112.5% of a diagonal dimension (D) of said image sensor (17).

15. An electronic device (14) according to any one of claims 12 to 14, wherein said catadioptric optical system (13) comprises an optical lens (12) arranged within said void (9), and wherein the distance (L) between said exit surface (5) and said image sensor (17), measured along the optical axis of the catadioptric optical system (13), is approximately 82% of a diagonal dimension (D) of said image sensor (17).

**Patentansprüche**

1. Katadioptrisches optisches System (13), umfassend:
   einen Festkörper (1) aus optischem Material, wobei der Festkörper (1) Folgendes umfasst:

   eine ringförmige Eintrittsfläche (2);
   eine ringförmige erste Zwischenfläche (3), die sich gegenüber der Eintrittsfläche (2) befindet;
   eine zweite Zwischenfläche (4), die im Wesentlichen kontinuierlich mit dem Innenring der ringförmigen Eintrittsfläche (2) ist; und
   eine Ausgangsfläche (5), die sich gegenüber der zweiten Zwischenfläche (4) befindet; wobei das System Folgendes umfasst:

   eine primäre reflektierende Oberfläche (6) und
   eine sekundäre reflektierende Oberfläche (7); wobei
   die primäre reflektierende Oberfläche (6) und die sekundäre reflektierende Oberfläche (7) derart angeordnet sind, dass ein Lichtstrahl, der durch die Eintrittsfläche (2) in das System eintritt, mindestens zweimal gefaltet wird, bevor er durch die Austrittsfläche (5) austritt; und wobei die Austrittsfläche (5) mit der ersten Zwischenfläche (3) durch eine Innenwand (8) verbunden ist, die sich in Richtung der zweiten Zwischenfläche (4) erstreckt, wodurch ein Hohlraum (9) innerhalb des Festkörpers (1) definiert wird; **dadurch gekennzeichnet, dass** sowohl die zweite Zwischenfläche (4) als auch die Austrittsfläche (5) ringförmige Oberflächen sind.

2. System nach Anspruch 1, wobei die Eintrittsfläche (2) eine ringförmige, brechende Rotationsfläche ist, die koaxial zur optischen Achse des Systems angeordnet ist.

3. System nach einem der Ansprüche 1 oder 2, wobei die erste Zwischenfläche (3) eine ringförmige, konkave Rotationsfläche ist, die koaxial zur optischen Achse des Systems angeordnet ist.

4. System nach einem der Ansprüche 1 bis 3, wobei die zweite Zwischenfläche (4) eine konvexe Rotationsfläche ist, die koaxial zur optischen Achse des Systems angeordnet ist.

5. System nach einem der Ansprüche 1 bis 4, wobei die primäre reflektierende Oberfläche (6) eine ringförmige, konkave Rotationsfläche ist, die koaxial zur optischen Achse des Systems angeordnet ist, mit einer Krümmung, die im Wesentlichen der Krümmung der ersten Zwischenfläche (3) entspricht.

6. System nach einem der Ansprüche 1 bis 5, wobei die sekundäre reflektierende Oberfläche (7) eine kreisförmige, konvexe Rotationsfläche ist, die koaxial zur optischen Achse des Systems angeordnet ist, mit einer Krümmung, die im Wesentlichen der Krümmung der zweiten Zwischenfläche (4) entspricht.

7. System nach einem der Ansprüche 1 bis 6, wobei die primäre reflektierende Oberfläche (6) eine Spiegelfilmbeschichtung (6A) ist, welche die erste Zwischenfläche (3) mindestens teilweise bedeckt, oder wobei die primäre reflektierende Oberfläche (6) ein Spiegel (6B) ist, der ein und derselbe wie die erste Zwischenfläche (3) ist.

8. System nach einem der Ansprüche 1 bis 7, wobei die sekundäre reflektierende Oberfläche (7) eine Spiegelfilmbeschichtung (7A) ist, welche die zweite Zwischenfläche (4) mindestens teilweise bedeckt, oder wobei die sekundäre reflektierende Oberfläche (7) ein Spiegel (7B) ist, der ein und derselbe wie die zweite Zwischenfläche (4) ist.

9. System nach einem der Ansprüche 1 bis 6, wobei mindestens eine der ersten Zwischenfläche (3) oder der zweiten Zwischenfläche (4) eine brechende Oberfläche ist.

10. System nach einem der Ansprüche 1 bis 6, ferner umfassend einen kreisförmigen Manginspiegel (10), der nach der zweiten Zwischenfläche (4) in dem Lichtstrahlenpfad angeordnet ist, wobei der Manginspiegel (10) die sekundäre reflektierende Oberfläche (7) und eine dritte Zwischenfläche (11) umfasst, wobei die dritte Zwischenfläche (11) eine konvexe, brechende Rotationsfläche ist und die sekundäre reflektierende Oberfläche (7) eine reflektierende Beschichtung (7C) auf der Rückseite der dritten Zwischenfläche (11) in Bezug auf den Lichtstrahlenpfad ist.

11. System nach einem der Ansprüche 1 bis 10, ferner umfassend eine zusätzliche optische Linse (12), die innerhalb des Hohlraums (9) koaxial zur optischen Achse des Systems angeordnet ist, um sphärische Aberration des Systems zu korrigieren.

12. Elektronische Vorrichtung (14), umfassend:

   ein Gehäuse (15);
   ein katadioptrisches optisches System (13) nach einem der Ansprüche 1 bis 11, das innerhalb des Gehäuses (15) angeordnet ist;
   wobei das Gehäuse (15) ferner eine Öffnung (16) umfasst, die innerhalb einer Wand des Gehäuses (15) angeordnet ist, um Lichtstrahlen zu ermöglichen, von einem Objekt in das katadioptrische optische System (13) einzutreten; und wobei
   die Vorrichtung (14) ferner einen Bildsensor (17) umfasst, der dazu angeordnet ist, in der Lage zu sein, Lichtstrahlen, die aus dem katadioptrischen optischen System (13) austreten, zu empfangen.

13. Elektronische Vorrichtung (14) nach Anspruch 12, wobei eine Dicke (S) des Festkörpers (1), definiert als die maximale Länge des Festkörpers (1), gemessen entlang der optischen Achse des katadioptrischen optischen Systems (13), zwischen 75 % und 125 % einer diagonalen Abmessung (D) des Bildsensors (17), bevorzugter zwischen 80 % und 120 % der diagonalen Abmessung (D) des Bildsensors (17) beträgt.

14. Elektronische Vorrichtung (14) nach einem der Ansprüche 12 oder 13, wobei der Abstand (L) zwischen der Austrittsfläche (5) und dem Bildsensor (17), gemessen entlang der optischen Achse des katadioptrischen optischen Systems (13), zwischen 80 % und 120 % einer diagonalen Abmessung (D) des Bildsensors (17), bevorzugter zwischen 87,5 % und 112,5 % einer diagonalen Abmessung (D) des Bildsensors (17) beträgt.

15. Elektronische Vorrichtung (14) nach einem der Ansprüche 12 bis 14, wobei das katadioptrische optische System (13) eine optische Linse (12) umfasst, die innerhalb des Hohlraums (9) angeordnet ist, und wobei der Abstand (L) zwischen der Austrittsfläche (5) und dem Bildsensor (17), gemessen entlang der optischen Achse des katadioptrischen optischen Systems (13), ungefähr 82 % einer diagonalen Abmessung (D) des Bildsensors (17) beträgt.

**Revendications**

1. Système optique catadioptrique (13), comprenant :

   un corps solide (1) de matériau optique, ledit corps solide (1) comprenant
   une surface d'entrée annulaire (2) ;
   une première surface intermédiaire annulaire (3) située à l'opposé de ladite surface d'entrée (2) ;
   une deuxième surface intermédiaire (4) étant sensiblement continue avec l'anneau intérieur de ladite surface d'entrée annulaire (2) ; et
   une surface de sortie (5) située à l'opposé de ladite deuxième surface intermédiaire (4) ; dans lequel le système comprend

   une surface réfléchissante primaire (6) et
   une surface réfléchissante secondaire (7) ; dans lequel
   ladite surface réfléchissante primaire (6) et ladite surface réfléchissante secondaire (7) sont agencées de sorte qu'un rayon lumineux entrant dans le système par ladite surface d'entrée (2) est plié au moins deux fois avant de sortir par ladite surface de sortie (5) ; et dans lequel ladite surface de sortie (5) est reliée à ladite première surface intermédiaire (3) par une paroi interne (8) s'étendant vers ladite deuxième surface intermédiaire (4), définissant ainsi un vide (9) à l'intérieur dudit corps solide (1) ;
   **caractérisé en ce que** ladite deuxième surface intermédiaire (4) et ladite surface de sortie (5) sont toutes deux des surfaces annulaires.

2. Système selon la revendication 1, dans lequel ladite surface d'entrée (2) est une surface réfractive annulaire de révolution agencée coaxialement à l'axe optique du système.

3. Système selon l'une quelconque des revendications 1 ou 2, dans lequel ladite première surface intermédiaire (3) est une surface de révolution annulaire concave agencée coaxialement à l'axe optique du système.

4. Système selon l'une quelconque des revendications 1 à 3, dans lequel ladite deuxième surface intermédiaire (4) est une surface de révolution convexe agencée coaxialement à l'axe optique du système.

5. Système selon l'une quelconque des revendications 1 à 4, dans lequel ladite surface réfléchissante primaire (6) est une surface de révolution annulaire, concave, de courbure correspondant sensiblement à la courbure de ladite première surface intermédiaire (3), agencée coaxialement avec l'axe optique du système.

6. Système selon l'une quelconque des revendications 1 à 5, dans lequel ladite surface réfléchissante secondaire (7) est une surface de révolution circulaire, convexe, de courbure correspondant sensiblement à la courbure de ladite deuxième surface intermédiaire (4), agencée coaxialement à l'axe optique du système.

7. Système selon l'une quelconque des revendications 1 à 6, dans lequel ladite surface réfléchissante primaire (6) est un revêtement de film miroir (6A) recouvrant au moins partiellement ladite première surface intermédiaire (3), ou dans lequel ladite surface réfléchissante primaire (6) est un miroir (6B) qui est identique à ladite première surface intermédiaire (3).

**8.** Système selon l'une quelconque des revendications 1 à 7, dans lequel ladite surface réfléchissante secondaire (7) est un revêtement de film miroir (7A) recouvrant au moins partiellement ladite deuxième surface intermédiaire (4), ou dans lequel ladite surface réfléchissante secondaire (7) est un miroir (7B) qui est identique à ladite deuxième surface intermédiaire (4).

**9.** Système selon l'une quelconque des revendications 1 à 6, dans lequel au moins l'une de ladite première surface intermédiaire (3) ou de ladite deuxième surface intermédiaire (4) est une surface réfringente.

**10.** Système selon l'une quelconque des revendications 1 à 6, comprenant également un miroir Mangin circulaire (10) agencé après la deuxième surface intermédiaire (4) dans ledit trajet de rayon lumineux, ledit miroir Mangin (10) comprenant ladite surface réfléchissante secondaire (7) et une troisième surface intermédiaire (11), ladite troisième surface intermédiaire (11) étant une surface réfringente convexe de révolution, et ladite surface réfléchissante secondaire (7) étant un revêtement réfléchissant (7C) sur le côté arrière de ladite troisième surface intermédiaire (11) par rapport audit trajet de rayon lumineux.

**11.** Système selon l'une quelconque des revendications 1 à 10, comprenant également une lentille optique supplémentaire (12) agencé à l'intérieur dudit vide (9), coaxialement à l'axe optique du système, pour corriger l'aberration sphérique du système.

**12.** Dispositif électronique (14), comprenant :

un boîtier (15) ;
un système optique catadioptrique (13) selon l'une quelconque des revendications 1 à 11 agencé à l'intérieur dudit boîtier (15) ;
dans lequel ledit boîtier (15) comprend également une ouverture (16) agencée à l'intérieur d'une paroi dudit boîtier (15) de manière à permettre aux rayons lumineux provenant d'un objet d'entrer dans le système optique catadioptrique (13) ; et dans lequel
ledit dispositif (14) comprend également un capteur d'image (17) agencé pour pouvoir recevoir des rayons lumineux sortant dudit système optique catadioptrique (13).

**13.** Dispositif électronique (14) selon la revendication 12, dans lequel une épaisseur (S) dudit corps solide (1), définie comme la longueur maximale du corps solide (1) mesurée le long de l'axe optique du système optique catadioptrique (13), est comprise entre 75% et 125% d'une dimension diagonale (D) dudit capteur d'image (17), de préférence entre 80% et 120% de la dimension diagonale (D) dudit capteur d'image (17).

**14.** Dispositif électronique (14) selon l'une quelconque des revendications 12 ou 13, dans lequel la distance (L) entre ladite surface de sortie (5) et ledit capteur d'image (17), mesurée le long de l'axe optique du système optique catadioptrique (13), est comprise entre 80% et 120% d'une dimension diagonale (D) dudit capteur d'image (17), de manière davantage préférée entre 87,5% et 112,5% d'une dimension diagonale (D) dudit capteur d'image (17).

**15.** Dispositif électronique (14) selon l'une quelconque des revendications 12 à 14, dans lequel ledit système optique catadioptrique (13) comprend une lentille optique (12) agencée à l'intérieur dudit vide (9), et dans lequel la distance (L) entre ladite surface de sortie (5) et ledit capteur d'image (17), mesurée le long de l'axe optique du système optique catadioptrique (13), représente environ 82% d'une dimension diagonale (D) dudit capteur d'image (17).

FIG. 1

FIG. 2

FIG. 3

FIG. 4

FIG. 5

FIG. 6

FIG. 7

**EP 3 990 960 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016187631 A1
- US 2018252905 A1
- US 9933604 B1